# EUROPEAN PATENT SPECIFICATION

(11) **EP 2 778 373 B1**
(45) Date of publication and mention of the grant of the patent: **19.06.2019**
(21) Application number: 12846960.8
(22) Date of filing: 09.11.2012
(51) Int. Cl.: F02C 7/28, F01D 11/00, F16J 15/08, F23R 3/42

(54) **SEAL ASSEMBLY AND GAS TURBINE PROVIDED THEREWITH**
DICHTUNGSANORDNUNG UND GASTURBINE DAMIT
ENSEMBLE JOINT D'ÉTANCHÉITÉ ET TURBINE À GAZ POURVUE DE CE DERNIER

(30) Priority: 10.11.2011 JP 2011246539
(43) Date of publication of application: 17.09.2014
(73) Proprietor: Mitsubishi Hitachi Power Systems, Ltd., Yokohama 220-8401 (JP)
(72) Inventor: FUJIMOTO Kiyoshi, Tokyo 108-8215 (JP); TANIGUCHI Kenta, Tokyo 108-8215 (JP); AOYAMA Yudai, Tokyo 108-8215 (JP)
(74) Representative: Henkel, Breuer & Partner
(86) International application number: PCT/JP2012/079147
(87) International publication number: WO 2013/069775

(56) References cited:
- WO-A1-2007/023734
- US-A1- 2009 072 497
- US-A1- 2009 085 305
- US-A1- 2010 061 837
- US-B1- 6 431 825

## Description

### TECHNICAL FIELD

The present invention relates to a seal device which is provided between transition pieces of combustors adjacent in the circumferential direction in the combustor of a gas turbine.

### BACKGROUND ART

A plurality of combustors of a gas turbine is provided so as to be adjacent in the circumferential direction of a rotor. In the plurality of combustors, flange portions of transition piece outlets are disposed so as to be adjacent to each other, a seal structure is provided at the connection, and thus, compressed air which is introduced into a casing from the compressor does not enter the inner portion of the turbine.

Various seal structures of this type are known, for example, in JP 4672728 B (FIG. 14), a recessed groove is formed on each of surfaces on which the flanges of adjacent combustors face each other, and a seal assembly is inserted between the recessed grooves. In the seal assembly, a long seal plate and a spring plate made of a metal are joined using spot welding, and the seal plate is formed in a thin plate in order to decrease exciting force due to vibration from the combustor.

US 2009/085305 A1 discloses a seal assembly intended to be inserted into a space defined by two facing concave portions of adjacent transition pieces. The seal assembly has a seal body with a seal plate arranged to contact the downstream side surfaces, and a spring portion connected with the seal plate at a link portion and having two elastic arm portions or leafs that contact the upstream side surfaces and are arranged to press the seal body toward the downstream side.

US 2009/072497 A1, on which the preamble portion of claim 1 is based, discloses various seal assemblies intended to be inserted into a space defined by two facing concave portions of adjacent transition pieces.

US 2010/0061837 A1 discloses a gas turbine transition duct apparatus comprising first and second turbine transition ducts and a strip seal. The strip seal may comprise a sealing element and a spring structure.

### DISCLOSURE OF THE INVENTION

### [Problem that the Invention is to solve]

However, since the seal plate of JP 4672728 B is formed in a thin plate, deformation occurs in the seal plate at the time of manufacturing, at the time of mounting and removing, and during operation, and there is a concern that a gap may occur between the recessed groove (concave portion) and the seal plate. Since compressed air outside the transition piece is leaked to the combustion gas side, the compressed air which is used for combustion in the combustor is decreased. Thereby, flame temperature inside the combustor is increased, and nitrogen oxide (NOx) in the combustion gas is increased. Moreover, there is a concern that the seal plate is damaged by self-excited vibration which is generated due to compressed air flowing into the gap.

In addition, in order to prevent the deformation and the damage occurrence due to suppression of the self-excited vibration, it is also possible to increase the thickness of the seal plate. However, in this case, since the shape of the recessed groove (concave portion) must be changed, in order to apply the seal assembly, in which the thickness of the seal plate is increased, to the already installed gas turbine, the combustors must be changed at the same time.

The present invention is made in consideration of the above-described circumstances, and an object thereof is to provide a seal assembly which can be also applied to an already installed gas turbine and can improve seal performance and durability by preventing deformation and damage of the seal plate, and a gas turbine having the seal assembly.

### [Means for solving the Problem]

According to the present invention, there is provided a seal assembly with the features of claim 1 which is configured to be inserted into a space, the space being defined by a pair of concave portions provided on side surfaces of transition piece outlet flanges which are provided in each of a plurality of combustors and are adjacent to each other in the side surfaces, including: a seal body in which a seal portion, which contacts each of side surfaces of a downstream side of combustion gas flowing through the transition piece of side surfaces which face each other in each of the pair of concave portions, is formed; and an elastic body which presses the seal body toward the downstream side, wherein the seal body includes a seal plate which faces a side surface of the downstream side of each of the pair of concave portions and in which the seal portion is formed, and a side plate which extends toward an upstream side of the combustion gas along a bottom surface of the concave portion from each of side edges, the side edges facing each other in the direction of the side surface in the seal plate, and the elastic body includes a seal plate contacting portion which contacts a surface of the upstream side of the seal plate and presses the seal plate toward the downstream side, and an elastic portion which extends from the seal plate contacting portion to the upstream side and in which a part of the elastic portion contacts a side surface of the upstream side of each of the pair of concave portions.

According to the seal assembly, in a state where the seal assembly is inserted into the concave portion, the elastic portion of the elastic body contacts the side surface of the upstream side of the concave portion and presses the seal body against the side surface of the downstream side of the concave portion via the seal plate contacting portion, and seal performance is exhibited. At this time, since the side plate extends from both side edges of the seal plate toward the upstream side, improvement of the cross-sectional stiffness can be achieved without increasing the thickness of the seal plate. Thereby, deformation and damage of the seal plate are prevented, and the seal performance and durability can be improved. In addition, since the plate thickness is not changed, the seal plate can correspond to the shape or the dimension of the existing concave portion, and the seal assembly can be inserted into the space.

Moreover, in the seal assembly according to the present invention, a cross-sectional shape of a corner, which is formed by the seal plate of the seal body and the side plate, may be an arc shape.

According to the corner having an arc shape as the cross-sectional shape, even in a case where the combustor thermally expands in the axial direction, even in cases where positional deviation between adjacent combustors occurs and is subsequently relieved or the like, since the seal assembly does not drop out from the concave portion and can move so as to enter the space, seal performance can be maintained.

Moreover, according to another aspect of the present invention, there is provided a gas turbine with the features of claim 4 including: a rotor; a plurality of combustors which are disposed in the circumferential direction of the rotor; and the seal assembly according to the invention which is inserted into the space, the space being defined by the concave portion of each of the adjacent combustors of the plurality of combustors.

According to the gas turbine, since the cross-sectional stiffness can be improved without increasing the plate thickness due to the side plate of the seal plate, the deformation and damage of the seal plate are prevented and seal performance can be improved without the design change accompanied by the shape change of the concave portion. Thereby, since leakage of the compressed air can be reduced, generated amount of nitrogen oxide can be reduced. Moreover, since the cross-sectional shape of the corner of the seal plate has an arc shape, the seal assembly can be smoothly moved in the insertion space while preventing the dropping-out of the seal assembly from the concave portion, and the seal performance can be maintained.

### [Effects of the Invention]

According to the seal assembly and the gas turbine of the present invention, the seal assembly and gas turbine can be applied to an already installed gas turbine, and improvement of the seal performance and durability can be achieved due to the side plates of both side portions of the seal plate.

### BRIEF DESCRIPTION OF THE DRAWINGS

FIG. 1 is an overall schematic diagram of a gas turbine according to an embodiment of the present invention.
FIG. 2 is a schematic cross-sectional view of a combustor of the gas turbine according to the embodiment of the present invention.
FIG. 3 is a single view drawing showing a transition piece and a seal assembly of the combustor of the gas turbine according to the embodiment of the present invention.
FIG. 4 is a view showing an installation state of the seal assembly in the combustor of the gas turbine according to the embodiment of the present invention, and shows a cross-section taken along line A-A of FIG. 3.
FIG. 5 is a single view drawing of the seal assembly in the combustor of the gas turbine according to the embodiment of the present invention.
FIG. 6A is a cross-sectional view of the seal assembly in the combustor of the gas turbine according to the embodiment of the present invention taken along line A-A of FIG. 5.
FIG. 6B is a cross-sectional view of the seal assembly in the combustor of the gas turbine according to the embodiment of the present invention taken along line B-B of FIG. 5.
FIG. 6C is a cross-sectional view of the seal assembly in the combustor of the gas turbine according to the embodiment of the present invention taken along line C-C of FIG. 5.

### BEST MODE FOR CARRYING OUT THE INVENTION

Hereinafter, a gas turbine 1 according to a preferred embodiment of the present invention will be described with reference to the appended drawings.

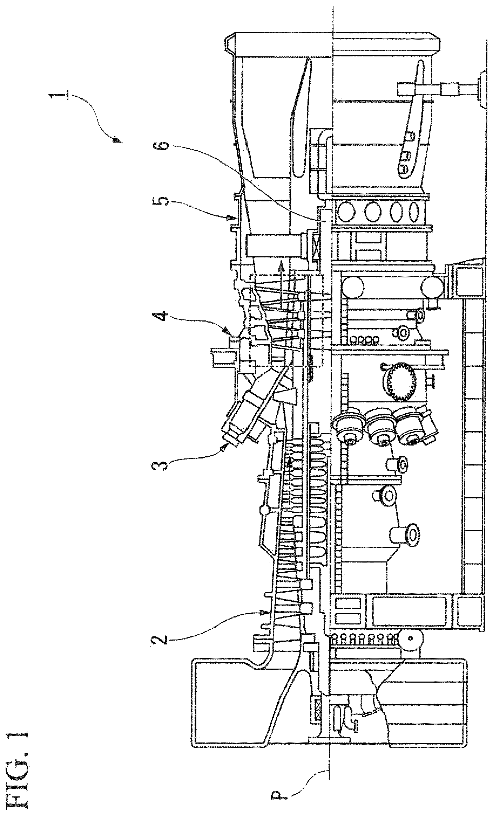

As shown in FIG. 1, in the gas turbine 1, after compressed air W generated in a compressor 2 is mixed with fuel in a combustor 3, the mixture is combusted, and high temperature and high pressure combustion gas G is generated. The combustion gas G flows into a turbine 4, and thus, a rotor 6 of the turbine 4 is rotated around an axis P (hereinafter, referred to as the axis P of the gas turbine 1), rotational power is obtained, and after the combustion gas G rotates the turbine 4, the combustion gas is exhausted through an exhaust chamber 5.

Next, the combustor 3 will be described.

Hereinafter, the compressor 2 side (the left side of the drawing in FIG 1) of the gas turbine 1 is referred to as an upstream side, and the exhaust chamber 5 side (the right side of the drawing in FIG. 1) is referred to as a downstream side.

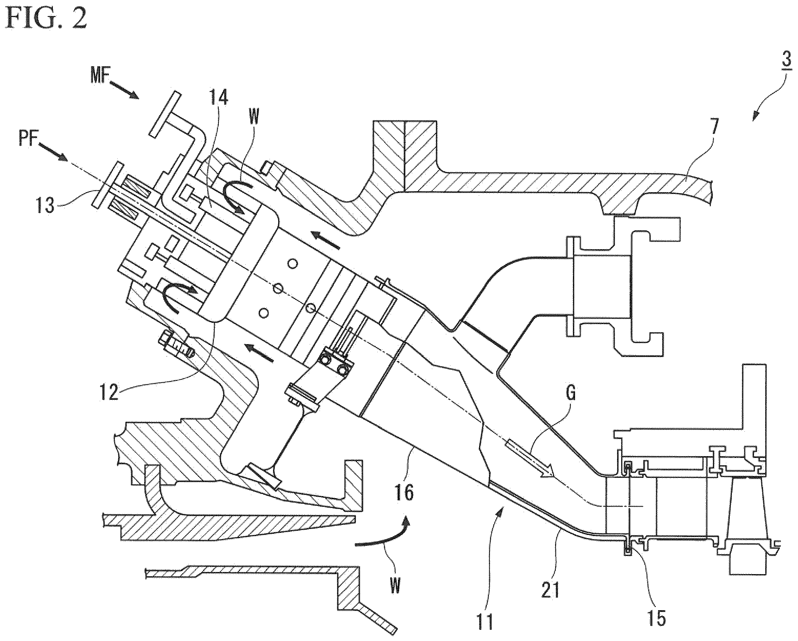

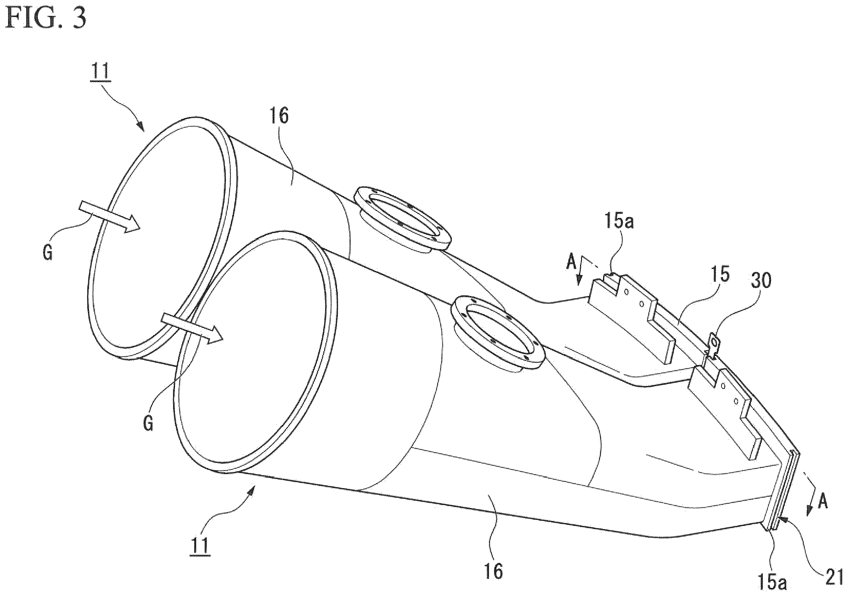

As shown in FIGS. 2 and 3, the combustor 3 is disposed between the compressor 2 and the turbine 4, and a plurality of combustors are installed adjacent to each other in the circumferential direction in the axis P of the gas turbine 1, and each of the combustors is connected to a casing 7.

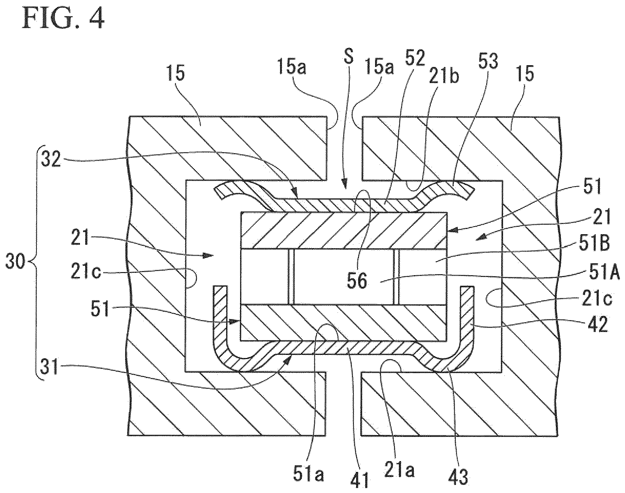

The combustor 3 includes a transition piece 11 which transports the high temperature and high pressure combustion gas G to the turbine 4 and a fuel supplier 12 which supplies the fuel and the compressed air W into the transition piece 11, and as shown in FIGS. 3 and 4, the combustor 3 includes a seal assembly 30 which is provided between outlet portions of the adjacent transition pieces 11.

The fuel supplier 12 includes a pilot burner 13 which supplies pilot fuel PF and compressed air W into the transition piece 11 and forms a diffusion flame in the transition piece 11, and a plurality of main nozzles 14 which premix a main fuel MF and compressed air W, supply the premixed gas into the transition piece 11, and form a premixed flame in the transition piece 11. Moreover, the combustion gas G is generated in the transition piece 11 by the pilot burner 13 and the main nozzle 14.

In the transition piece 11, a transition piece outlet flange 15 is provided in the downstream end of a tubular member 16, the combustor 3 and the turbine 4 are connected to each other via the transition piece outlet flange 15, and the combustion gas G can flow into the turbine 4.

As shown in FIGS. 3 and 4, in the transition piece outlet flange 15, a concave portion 21 is formed to be recessed toward the circumferential direction with respect to the axis P of the gas turbine 1 so as to be separated from each other from an opposite surface 15a in which the transition piece outlet flanges 15 of the adjacent combustors 3 face each other. Moreover, a space S is formed by the concave portions 21 which face each other, and the seal assembly 30 is inserted into the space S.

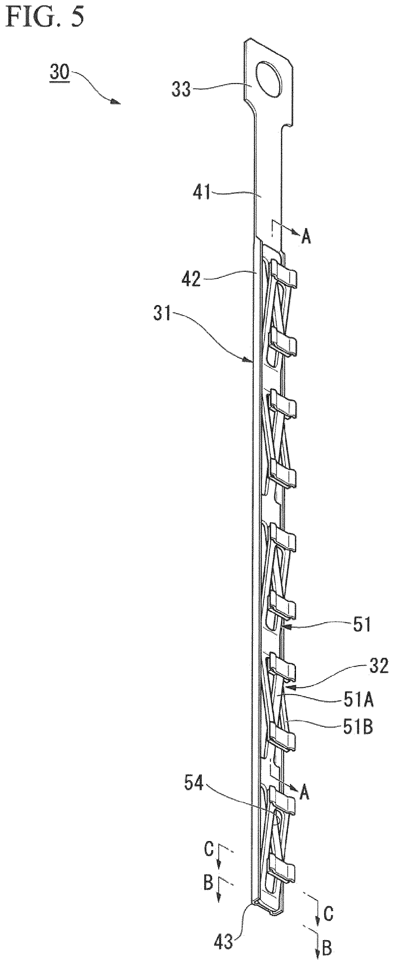

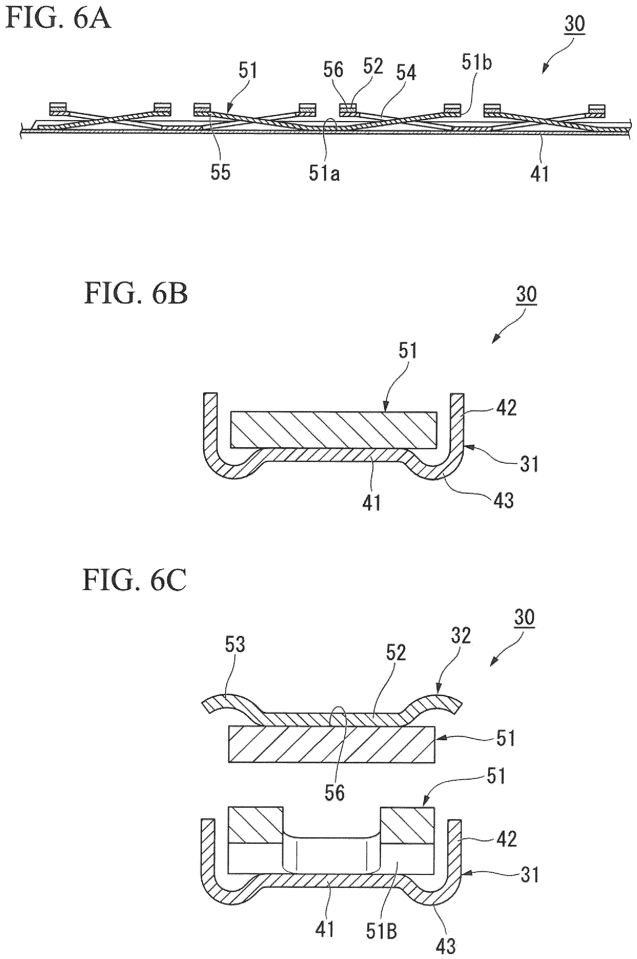

Next, the seal assembly 30 will be described with reference to FIGS. 4, 5, and 6A to 6C.

In the seal assembly 30, the radial direction with respect to the axis P of the gas turbine 1 is referred to as the longitudinal direction, and the seal assembly is provided over the entire region in the radial direction inside the space S and is a seal member made of metal which prevents the compressed air W outside the transition piece 11 from mixing with the combustion gas G.

In the space S, the seal assembly 30 includes a seal body 31 which faces a first side surface 21 a which is a side surface of the downstream side of the concave portion 21, and a spring portion (elastic body) 32 which faces a second side surface 21b which is a side surface of the upstream side.

The seal body 31 includes a seal plate 41 which becomes a seal portion which contacts the first side surface 21a. A side plate 42 which extends toward the upstream side along a bottom surface 21c of the concave portion 21 is formed from a side edge which is positioned in both edge portions in the circumferential direction with respect to the axis P of the gas turbine 1 of the seal plate 41.

In addition, the seal body 31 has a convex portion 43 which protrudes to the downstream side so that the cross-section in the side edge is an arc shape, and the side plate 42 and the seal plate 41 is connected to each other by a smooth curved surface with no edge.

Moreover, the end portion in the outer side in the radial direction with respect to the axis P of the gas turbine 1 of the seal body 31 becomes a handle portion 33 when the seal assembly 30 is inserted into the space S.

The spring portion 32 includes a spring plate 51 which can be elastically deformed, and the spring plate 51 is joined to the seal plate 41 by welding in a seal plate contacting portion 51a which is positioned on the surface which is toward the upstream side of the seal plate 41. Moreover, the spring plate 51 is formed so as to extend in a V shape to be separated from the seal plate 41 toward both the inner and outer sides in the radial direction of the axis P of the gas turbine 1 in the upstream side having the seal plate contacting portion 51a as a base point. Moreover, a plurality of spring plates 51 are provided at a constant interval in the longitudinal direction, and the adjacent spring plates 51 are overlapped with each other in an intermediate position between the seal plate contacting portion 51a and an end portion 51b of the spring plate 51. Specifically, the spring plate 51 is configured by two kinds of a spring plate 51A which is formed to be long and slender and a spring plate 51B on which a through-hole 54 is formed. The spring plate 51 is installed in a state where the spring plate 51A passes through the through-hole 54 which is formed on the spring plate 51B.

In the spring plate 51, a bent portion 55 is provided so as to form a parallel surface 56 parallel to the seal plate 41 at the position of the further upstream side than the through-hole 54 in the intermediate position between the seal plate contacting portion 51a and the end portion 51b. Moreover, an abutment portion 52 (elastic portion), which is formed in an approximately rectangular shape which becomes a seal portion facing the second side surface 21b, is placed on the parallel surface 56 from the upstream side and is joined by welding.

Moreover, the abutment portion 52 includes a convex portion 53 which protrudes in a curved shape in the upstream side of both edge portions in the circumferential direction of the axis P of the gas turbine 1, and the convex portion 53 contacts the second side surface 21b of the concave portion 21.

In the gas turbine 1, in a state where the seal assembly 30 is inserted into the space S, the convex portion 53 of the abutment portion 52 contacts the second side surface 21b of the concave portion 21, and presses the seal body 31 against the first side surface 21a of the downstream side via the seal plate contacting portion 51a. In this way, the gap is not formed between the adjacent transition piece outlet flanges 15, and the seal assembly 30 can securely exhibit seal performance.

Moreover, since the side plate 42 is provided in the seal body 31, a cross-sectional stiffness can be improved without increasing the thickness of the seal plate 41. Accordingly, due to the improvement in the cross-sectional stiffness, it is possible to prevent the seal assembly 30 from being deformed at the time of installing in the space S, the formation of the gap between the concave portion 21 and the seal assembly 30 can be avoided, and thus, seal performance can be improved.

Even when the seal assembly 30 is deformed and the gap is formed, since the side plate 42 is provided in the seal body 31, it is possible to avoid self-excited vibration which occurs due to leaked air passing through the gap. Accordingly, it is possible to avoid damage of the seal assembly 30 due to the self-excited vibration, and durability of the seal assembly 30 can be improved.

Moreover, although positional deviation occurs between the adjacent combustors 3 due to operation of the gas turbine 1, the convex portion 43 of the seal body 31 can contact the first side surface 21a of the concave portion 21 and the convex portion 53 of the abutment portion 52 can contact the second side surface 21b following to the positional deviation. Thereby, the gap is not formed between the adjacent transition piece outlet flanges 15, the seal performance can be securely exhibited, and it is possible to prevent the compressed air W outside the transition piece 11 from being mixed with the combustion gas G.

In addition, even though thermal expansion and contraction in the axis P direction of the combustor 3 occur due to operation of the gas turbine 1 or the combustor 3 is vibrated, since the side plate 42 is provided, the places in which the seal assembly 30 contacts the first side surface 21a, the second side surface 21b, and the bottom surfaces 21c which are the inner circumferential surfaces of the concave portion 21 are increased, the seal assembly 30 does not easily drop out from the space S. Moreover, since the connection portion between the seal plate 41 and the side plate 42 is formed in a curved surface shape with no edge, even though the seat assembly 30 drops out from the space S, the seal assembly 30 can smoothly move so as to enter the space S again when the positional deviation of the combustor 3 is relieved or the vibration stops by shutdown operation or the like of the gas turbine.

In addition, in a case of a rectangular shape in which the seal body 31 does not have the side plate 42, there is a concern that the seal body 31 may be locked in a corner which is formed between the bottom surface 21c and the first side surface 21a of the concave portion 21 or a corner which is formed between the bottom surface 21c and the second side surface 21b. However, with respect to this, it can be prevented that the seal body 31 of the present embodiment be locked due to the side plate 42, and seal performance can be securely exhibited.

According to the gas turbine 1 of the present embodiment, due to the side plate 42 of the seal body 31, the cross-sectional stiffness of the seal plate 41 can be increased without increasing the thickness of the seal plate 41, and it is possible to avoid deformation and damage of the seal assembly 30. Thereby, it is possible to achieve improvement of the seal performance. Moreover, the damage due to the self-excited vibration can be avoided, and it is possible to improve durability of the seal assembly 30. In addition, due to leakage of the compressed air W to the combustion gas G from the outside of the transition piece 11, shortage of air for combustion flowing to the combustor 3 is prevented, and thereby, an increase in the flame temperature and occurrence of nitrogen oxide can be prevented, and properties of the exhaust gas of the gas turbine 1 can be improved.

Moreover, the cross-sectional stiffness can be improved without increasing the plate thickness and the dimension in the axis P direction of the seal assembly at the time of being installed to the space S is not increased, and thus, design change of the transition piece 11 accompanied by the shape change of the concave portion 21 is not needed. In other words, in the gas turbine 1 of the present embodiment, the seal performance can be improved without changing the combustor 3 mounted in advance, and thus, properties of the exhaust gas can be improved.

Moreover, even when the positional deviation of the combustor 3 occurs, it can be prevented that the seal assembly 30 be dropping out or be locked due to the side plate 42 of the seal body 31.

As described above, the preferred embodiment of the present invention is described. However, the present invention is not limited to the above-described embodiment Addition, abbreviation, substitution, and other changes of the configuration are possible within a scope which does not depart from the gist of the present invention. The present invention is not limited by the above mentioned description and is limited only by the scope of the attached claims.

For example, CrC, WC, MoS2 or the like having abrasion resistance may be coated on the surfaces of the convex portion 43 of the seal body 31 and the convex portion 53 of the abutment portion 52, durability of the seal assembly 30 is improved due to the coating, and the performance improvement of the gas turbine 1 can be further achieved.

Moreover, the convex portion 43 is not formed in the seal body 31, and the connection portion between the side plate 42 and the seal plate 41 may be formed only in an R shape.

In addition, in the above-described embodiment, the adjacent spring plates 51 are disposed so as to be overlapped with each other. However, according to the disposition interval of the spring plate 51, the length size of the spring plate 51, or the like, the seal assembly 30 may be also manufactured so that the spring plates are not overlapped with each other.

### [Industrial Applicability]

The present invention relates to a seal assembly which is provided between transition pieces of combustors adjacent in the circumferential direction. According to a seal assembly of the present invention, the seal assembly can be applied to an already installed gas turbine, and it is possible to improve seal performance and durability by preventing deformation and damage of a seal plate.

### [Description of Symbols]

1: gas turbine, 2: compressor, 3: combustor, 4: turbine, 5: exhaust chamber, 6: rotor, 7: casing, 11: transition piece, 12: fuel supplier, 13: pilot burner, 14: main nozzle, 15: transition piece outlet flange, 15a: opposite surface, 16: tubular member, 21: concave portion, 21a: first side surface, 21b: second side surface, 21c: bottom surface, 30: seal assembly, 31: seal body, 32:spring portion (elastic body), 33: handle portion, 41: seal plate, 42: side plate, 43: convex portion, 51: spring plate, 51a: seal plate contacting portion, 51b: end portion, 52: abutment portion (elastic portion), 53: convex portion, 54: through-hole, 55: bent portion, 56: parallel surface, P: axis, W: compressed air, G: combustion gas, MF: main fuel, PF: pilot fuel, S: space

## Claims

1. A seal assembly (30) which is arranged to be inserted into a space (S), the space (S) being defined by a pair of concave portions (21) provided on side surfaces (15a) of transition piece outlet flanges (15) of transition pieces (11) which are provided in each of a plurality of combustors (3) that are adjacent to each other in the mounted state in a gas turbine so that the side surfaces (15a) face each other, wherein the concave portions (21) each have
a first side surface (21a) which is located on a downstream side of the concave portion (21) with respect to combustion gas flowing through the transition pieces (11), a second side surface (21b) which is located on an upstream side and faces the first side surface (21a), and
a bottom surface (21c),
the seal assembly (30) comprising:
a longitudinal direction that corresponds to an insertion direction of the seal assembly (30) into the space (S),
a seal body (31) comprising a seal plate (41) which is arranged such that, in the inserted state in the space (S), it faces the first side surface (21a) of each of the pair of concave portions (21) and which has a seal portion contacting the first side surfaces (21a) in the mounted state, and
a spring portion (32) arranged to press the seal plate (41) toward the downstream side, the spring portion (32) comprising
a first spring plate (51A) and a second spring plate (51B) which is adjacent to the first spring plate (51A),
wherein the first spring plate (51A) and the second spring plate (51B) include a seal plate contacting portion (51a) at which it is joined to a surface on the upstream side of the seal plate (41) by welding,
wherein each spring plate (51A,51B) extends from the seal plate contacting portion (51a) to the upstream side so that a part of each spring plate (51A,51B)contacts the second side surface (21b) of each of the pair of concave portions (21), and
wherein the first spring plate (51A) passes through a through-hole (54) which is formed in the second spring plate (51B),
**characterized in that**
the seal body (31) comprises side plates (42) which extend from opposite side edges transverse to the longitudinal direction of the seal plate (41) toward the upstream side along the bottom surface (21c) of the concave portions (21).

2. The seal assembly (30) according to claim 1,
wherein a cross-sectional shape of a corner, which is formed by the seal plate (41) of the seal body (31) and the side plate (42), is an arc shape.

3. The seal assembly (30) according to claim 1 or 2,
wherein an abutment portion (52) which is formed in an approximately rectangular shape which becomes a seal portion facing the second side surface (21b) in the mounted state is placed on a parallel surface (56) of the spring plate (51A,51B) from the upstream side and is joined to the parallel surface (56) by welding.

4. A gas (1) turbine comprising:
a rotor (6);
a plurality of combustors (3) which are disposed in the circumferential direction of the rotor (6) so that a space (S) is defined by a pair of concave portions (21) of the adjacent combustors (3) of the plurality of combustors (3) facing each other in the circumferential direction; and
the seal assembly (30) according to anyone of claims 1 to 3 which is inserted into the space (S).

## Patentansprüche

1. Eine Dichtungsanordnung (30), die angeordnet ist, um in einen Raum (S) eingesetzt zu werden, wobei der Raum (S) durch ein Paar von konkaven Abschnitten (21) definiert ist, die an Seitenoberflächen (15a) von Übergangsstück-Auslassflanschen (15) von Übergangsstücken (11) vorgesehen sind, welche in jeder von einer Vielzahl von Brennkammern (3) vorgesehen sind, die einander in dem eingebauten Zustand in einer Gasturbine benachbart sind, sodass die Seitenoberflächen (15a) einander zugewandt sind, wobei die konkaven Abschnitte (21) jeweils aufweisen:
eine erste Seitenoberfläche (21a), die sich an einer stromabwärtigen Seite des konkaven Abschnitts (21) bezüglich eines durch die Übergangsstücke (11) strömenden Verbrennungsgases befindet,
eine zweite Seitenoberfläche (21b), die sich an einer stromaufwärtigen Seite befindet und der ersten Seitenoberfläche (21a) zugewandt ist, und
eine untere Oberfläche (21c),
wobei die Dichtungsanordnung (30) aufweist:
eine longitudinale Richtung, die einer Einsetzrichtung der Dichtungsanordnung (30) in den Raum (S) entspricht,
einen Dichtungskörper (31) mit einer Dichtungsplatte (41), die so angeordnet ist, dass, in dem eingesetzten Zustand in dem Raum (S), sie der ersten Seitenoberfläche (21a) von jedem des Paars von konkaven Abschnitten (21) zugewandt ist, und die einen Dichtungsabschnitt besitzt, der die ersten Seitenoberflächen (21a) in dem eingebauten Zustand berührt, und
einen Federabschnitt (32), der angeordnet ist, um die Dichtungsplatte (41) zu der stromabwärtigen Seite zu drücken, wobei der Federabschnitt (32) aufweist:
eine erste Federplatte (51A) und eine zweite Federplatte (51B), die der ersten Federplatte (51A) benachbart ist,
wobei die erste Federplatte (51A) und die zweite Federplatte (51B) einen Dichtungsplatten-Kontaktabschnitt (51a) aufweisen, an dem sie mit einer Oberfläche an der stromaufwärtigen Seite der Dichtungsplatte (41) durch Schweißen verbunden ist,
wobei jede Federplatte (51A,51B) sich von dem Dichtungsplatten-Kontaktabschnitt (51a) zu der stromaufwärtigen Seite so erstreckt, dass ein Teil von jeder Federplatte (51A,51B) die zweite Seitenoberfläche (21b) von jedem des Paars von konkaven Abschnitten (21) berührt, und
wobei die erste Federplatte (51A) durch ein Durchgangsloch (54) verläuft, das in der zweiten Federplatte (51B) ausgebildet ist,
**dadurch gekennzeichnet, dass**
der Dichtungskörper (31) Seitenplatten (42) aufweist, die sich von gegenüberliegenden Seitenrändern quer zu der longitudinalen Richtung der Dichtungsplatte (41) zu der stromaufwärtigen Seite entlang der unteren Oberfläche (21c) der konkaven Abschnitte (21) erstrecken.

2. Die Dichtungsanordnung (30) gemäß Anspruch 1,
wobei eine Querschnittform einer Ecke, die durch die Dichtungsplatte (41) des Dichtungskörpers (31) und die Seitenplatte (42) gebildet ist, eine Bogenform ist.

3. Die Dichtungsanordnung (30) gemäß Anspruch 1 oder 2,
wobei ein Anlageabschnitt (52), der in einer annähernd rechteckigen Form ausgebildet ist, die ein Dichtungsabschnitt wird, der der zweiten Seitenoberfläche (21b) in dem eingebauten Zustand zugewandt ist, an einer parallelen Oberfläche (56) der Federplatte (51A,51B) von der stromaufwärtigen Seite angeordnet ist und mit der parallelen Oberfläche (56) durch Schweißen verbunden ist.

4. Eine Gasturbine (1) mit:
einem Rotor (6),
einer Vielzahl von Brennkammern (3), die in der Umfangsrichtung des Rotors (6) so angeordnet sind, dass ein Raum (S) durch ein Paar von konkaven Abschnitten (21) der benachbarten Brennkammern (3) der Vielzahl von Brennkammern (3), die einander in der Umfangsrichtung zugewandt sind, definiert ist, und
die Dichtungsanordnung (30) gemäß einem der Ansprüche 1 bis 3, die in den Raum (S) eingesetzt ist.

## Revendications

1. Dispositif (30) d'étanchéité, qui est agencé pour être inséré dans un espace (S), l'espace (S) étant défini par une paire de parties (21) concaves, prévues sur des surfaces (15a) latérales de rebord (15) de sortie de pièces (11) de transition, qui sont prévues dans chacune d'une pluralité de chambres de combustion (3) voisines les unes des autres à l'état monté dans une turbine à gaz, de manière à ce que les surfaces (15a) latérales soient en face l'une de l'autre, dans lequel les parties (21) concaves ont chacune
une première surface (21a) latérale, qui est placée d'un côté en aval de la partie (21) concave par rapport au gaz de combustion passant dans les pièces (11) de transition, une deuxième surface (21b) latérale, qui est placée d'un côté en amont et est en face de la première surface (21a) latérale et
une surface (21c) de fond,
le dispositif (30) d'étanchéité comprenant :
une direction longitudinale, qui correspond à une direction d'insertion du dispositif (30) d'étanchéité dans l'espace (S),
un corps (31) de joint, qui comprend une plaque (41) de joint, qui est agencée de manière à ce que, à l'état inséré dans l'espace (S), elle soit en face de la première surface (21a) latérale de chacune de la paire de parties (21) concaves, et qui a une partie de joint en contact avec les premières surfaces (21a) latérales à l'état monté et
une partie (32) de ressort, agencée pour pousser la plaque (41) de joint vers le côté en aval, la partie (32) de ressort comprenant
une première plaque (51A) de ressort et une deuxième plaque (51B) de ressort, qui est voisine de la première plaque (51A) de ressort,
dans lequel la première plaque (51A) de ressort et la deuxième plaque (51B) de ressort comprennent une partie (51a) en contact avec la plaque de joint où elle est jointe à une surface du côté en amont de la plaque (41) de joint par soudage,
dans lequel chaque plaque (51A, 51B) de ressort s'étend de la partie (51a) en contact avec la plaque de joint au côté en amont, de manière à ce qu'une partie de chaque plaque (51A, 51B) de ressort soit en contact avec la deuxième surface (21b) latérale de chacune de la paire de parties (21) concaves et
dans lequel la première plaque (51A) de ressort passe dans un trou (54) traversant, formé dans la deuxième plaque (51B) de ressort,
**caractérisé en ce que**
le corps (31) de joint comprend des plaques (42) latérales, qui s'étendent de bords latéraux opposés transversalement à la direction longitudinale de la plaque (41) de joint vers le côté en amont suivant la surface (21c) de fond des parties (21) concaves.

2. Dispositif (30) d'étanchéité suivant la revendication 1,
dans lequel une forme de section transversale d'un coin formé par la plaque (41) de joint du corps (31) de joint et la plaque (42) latérale est une arquée.

3. Dispositif (30) d'étanchéité suivant la revendication 1 ou 2,
dans lequel une partie (52) de butée, de forme à peu près rectangulaire, qui devient une partie de joint faisant face à la deuxième surface (21b) latérale à l'état monté, est placée sur une surface (56) parallèle de la plaque (51A, 51B) de ressort à partir du côté en amont et est jointe à la surface (56) parallèle par soudage.

4. Turbine à gaz (1) comprenant :
un rotor (6) ;
une pluralité de chambres de combustion (3), qui sont disposés dans la direction circonférentielle du rotor (6), de manière à définir un espace (S) par une paire de parties (21) concaves des chambres de combustion (3) voisines de la pluralité de chambres de combustion (3) se faisant face dans la direction circonférentielle et
le dispositif (30) d'étanchéité suivant l'une quelconque des revendications 1 à 3, qui est inséré dans l'espace (S).
